# EUROPÄISCHE PATENTSCHRIFT

(11) **EP 2 803 526 B1**
(45) Veröffentlichungstag und Bekanntmachung des Hinweises auf die Patenterteilung: **10.10.2018**
(21) Anmeldenummer: 14168207.0
(22) Anmeldetag: 14.05.2014
(51) Int. Cl.: B60N 2/02, F16B 37/04

(54) **Sitztiefenversteller**
Seat depth adjuster
Dispositif de réglage de profondeur de siège

(30) Priorität: 14.05.2013 DE 202013102108 U
(43) Veröffentlichungstag der Anmeldung: 19.11.2014
(73) Patentinhaber: Kokinetics GmbH, 65830 Kriftel (DE)
(72) Erfinder: Dietz, Horst, 67727 Lohnsfeld (DE)
(74) Vertreter: Patentanwälte und Rechtsanwalt Weiß, Arat & Partner mbB

(56) Entgegenhaltungen:
- DE-A1-102009 012 782
- DE-U1-202007 000 484
- US-A1- 2005 281 634
- US-A1- 2008 056 842

## Beschreibung

Die Erfindung betrifft einen Sitztiefenversteller nach dem Oberbegriff des Anspruchs 1.

### STAND DER TECHNIK

Aus dem Stand der Technik sind verschiedene Sitztiefenversteller bekannt und gebräuchlich.

### AUFGABE DER ERFINDUNG

Aufgabe der Erfindung ist es, einen Sitztiefenversteller zur Verfügung zu stellen, welcher kostengünstig hergestellt werden kann und dabei ein möglichst geringes Gewicht aufweisen soll.

In diesem Zusammenhang wird auf die gattungsbildende DE 20 2007 000 484 U1 hingewiesen.

Dort ist ein Sitztiefenversteller offenbart, bei dem Teile der Sitzwanne aus Kunststoff hergestellt ist und dabei Verbindungselemente aufweist, welche zur Verbindung von weiteren Funktionskomponenten geeignet sind.

Weiter wird auf die DE 10 2009 012 782 A1 hingewiesen, welche einen Fahrzeugsitz mit einem Tragteil offenbart, an welchem eine Einrichtung zur Verstellungd er Sitztiefe angeordnet ist und dabei das Tragteil aus Kunststoff besteht.

Ausserdem wird auf die US 2005/0281634 A1 hingewiesen, welche eine Plastikschraube offenbart.

Zuletzt wird auf die US 2008/0056842 A1 hingewiesen, welche ein teilweise schraubenförmiges Befestigungselement für die Automobilindustrie offenbart.

### LÖSUNG DER AUFGABE

Zur Lösung der Aufgabe führen die Merkmale nach Anspruch 1; Weiterbildungen der Erfindung sind in den abhängigen Ansprüchen angegeben.

Eines der schwersten Elemente des Fahrzeugsitzes mit Sitztiefenversteller ist das Verbindungsteil zum Sitz hin. Dadurch, dass dieses nunmehr aus Kunststoff besteht, erfolgt eine erhebliche Gewichtsreduktion. Ausserdem können derartige Kunststoffteile wesentlich schneller im Spritzgiessverfahren hergestellt werden, als die herkömmlichen Blechteile. Zudem können dem erfindungsgemässen Tragteil auch alle möglichen Ein- und Anformungen zur Erhöhung seiner Funktionalität mit gegeben werden.

In einem bevorzugten Ausführungsbeispiel erfolgt die Herstellung der Polsterträgerplatte aus Kohlenstofffaser verstärktem Kunststoff. Die Kohlenstofffasern sind dabei in mehreren Lagen in eine Kunststoffmatrix eingebettet. Dabei kann durch die Faserrichtung der erforderlichen Steifigkeit und Festigkeit der Polsterträgerplatte Rechnung getragen werden.

Ein erfindungsgemässer Sitztiefenversteller weist für die Verbindung von Bauteilen untereinander und/oder von Bauteilen mit der Polsterträgerplatte und/oder der Polsterträgerplatte mit einem Sitzteil eingespritzte oder eingegossene Befestigungselemente auf.

Dies bedeutet eine wesentliche Erleichterung beim Zusammenbau und der Montage des Sitztiefenverstellers und dessen Festlegung an einem Sitzteil. Die Befestigungselemente sind dabei unverlierbar mit Bauelementen des Sitztiefenverstellers verbunden und ferner bereits an der richtigen Stelle positioniert. Hervorzuheben ist auch, dass diese Befestigungselemente höhere Crash-Kräfte auffangen können, insbesondere wenn diese beispielsweise von dem Unterschenkel eines Fahrers oder Beifahrers ausgehen.

Bevorzugt besteht das Befestigungselement aus einem Metall und ist im Kaltfliesspressverfahren hergestellt. Im Werkzeug ist keine Lagepositionierung notwendig, da es sich bei dem Befestigungselement um ein Rundteil handelt.

Erfindungsgemäß weist das Befestigungselement einen Gewindeabschnitt zum Aufsetzen einer Mutter auf. Während das Befestigungselement in einem Bauteil umspritzt festsitzt, schaut dieser Gewindeabschnitt aus diesem Bauteil heraus und ist dazu geeignet, beispielsweise in entsprechende Ausnehmungen in einem anderen Bauteil einzugreifen und durch eine Mutter gesichert zu werden.

Zur Festlegung des Befestigungselementes in dem ersten Bauteil weist das Befestigungselement einen umspritz- oder umgiessbaren Gewindeabschnitt auf. Dieser Gewindeabschnitt bestimmt auch die Festigkeit des Sitzes des Befestigungselementes in dem Bauelement. Das Gewinde des Gewindeabschnitts ist sehr ausgeprägt, d.h., es weist eine relativ hohe Tiefe auf. Hierdurch entstehen Auflageflächen grösseren Ausmasses auf dem Werkstoff des Bauelementes, so dass ein derartiges Befestigungselement hohe Beanspruchungen, insbesondere Zugbeanspruchungen aushält.

Ein Durchmesser dieses umspritz- bzw. umgiessbaren Gewindeabschnitts ist grösser als der Durchmesser des Gewindeabschnitts, auf den die Mutter aufgesetzt wird. Dagegen ist aber die Drehrichtung des Gewindes die gleiche. Dies bedeutet, dass der umgossene Gewindeabschnitt gleichzeitig auch eine Verdrehsicherung durch Kraftschluss ergibt, wobei diese Verdrehsicherung aber auch eventuell zusätzlich über Formschluss realisierbar ist.

Vor allem wird diese Verdrehsicherung auch dadurch bewirkt, dass der umspritzte Gewindeabschnitt an einem scheibenförmigen Abschnitt endet, der den umspritzten Gewindeabschnitt von dem anderen Gewindeabschnitt trennt. Dieser scheibenförmige Abschnitt wird ebenfalls noch vom Werkstoff des Schubelements aufgenommen, so dass er etwa bündig mit einer Unterfläche dieses Schubelements abschliesst. An diesem scheibenförmigen Abschnitt endet aber auch das Gewinde des eingespritzten Gewindeabschnitts, so dass das Befestigungselement nicht mehr gedreht werden kann.

Durch diese Massnahme wird ein heute häufig auftauchendes Problem beseitig, dass nämlich die Polsterträgerplatte und die Basisplatte zu viel Spiel haben, insbesondere, wenn die Einrichtung zur Sitztiefenverstellung gänzlich ausgezogen ist. In diesem Fall kann der Fahrer oder Beifahrer mit seinem Oberschenkel unter das ausgefahrene Teil haken und dieses anheben. Aus diesem Grunde darf das ausgefahrene Teil nicht mehr als 4 mm Spiel haben. Gemäss der vorliegenden Erfindung wird dies dadurch vermieden, dass das Spiel zur Schiene und Nut verringert wird. Auf diese Weise kann das vorgeschriebene Spiel eingehalten werden.

In einem bevorzugten Ausführungsbeispiel ist die Schiene als liegendes L ausgebildet und greift mit einem Fussstreifen in die hinterschnittene Nut ein. Dabei wirkt vor allem der Rist des Fussstreifens mit der Nutdecke zusammen. Deren Abstand zueinander wird verringert. Der Einfachheit halber geschieht dies dadurch, dass beide eine Schrägfläche aufweisen, die schräg zur Schubrichtung verläuft. Bei Ausfahren des Sitztiefenverstellers wird so der Abstand zwischen den beiden Schrägflächen vermindert und so das Spiel ausgeglichen. Von der Erfindung werden auch sämtliche andere möglichen Linearführungen umfasst.

Eine Polsterträgerplatte für den erfindungsgemäßen Sitztiefenversteller weist eine Führung auf. Diese Führung wurde im Stand der Technik als gesondertes Teil mit der Polsterträgerplatte durch Vernieten oder auf eine andere Art und Weise verbunden. Gemäß einer Weiterbildung der Erfindung (sowie auch zum Beispiel aus der vorveröffentlichten, derselben Anmelderin gehörenden DE 10 2012 107 817 A1 bekannt) werden nun die Polsterträgerplatte und die Führung einstückig ausgebildet. Dies hat den Vorteil, dass zum einen die Verbindungselemente, wie Nieten weggelassen werden können und zum anderen die Polsterträgerplatte nach der erfindungsgemässen Ausführung weniger Gewicht aufweist. Hinzu kommt vorteilhaft der Umstand, dass es an den Vernietungen oder Verbindungspunkten der Polsterträgerplatte mit der Führung nach längerem Gebrauch zu Abnutzungserscheinungen, sowie Quietschgeräuschen kommen konnte. Dies ist nun abgestellt.

Im Rahmen dieser Anmeldung sollen die Offenbarungen der DE 10 2009 012 776.3, der DE 10 2008 049 923.4, der DE 10 2006 018 353 und der DE 20 2007 002 803.2 ausdrücklich erwähnt werden: Dies gilt insbesondere im Rahmen der Offenbarung für einen Sitztiefenversteller.

Weiterhin weist die Polsterträgerplatte die Führung derart auf, dass die Führung im Wesentlichen den mittigen Teil der Polsterträgerplatte ausmacht. Dies bedeutet im Einzelnen, dass der vorher nicht genutzte mittige Teil der Polsterträgerplatte nun durch die Führung ausgestaltet wird. Hierdurch wird vorteilhaft erreicht, dass eine Gewichtseinsparung bei hoher Funktionalität stattfinden kann.

Ein weiteres Ausführungsbeispiel der Polsterträgerplatte weist ausserdem einen Funktionsarm auf, der zwischen 0,5 cm und 14,5 cm lang ausgebildet sein kann. Bevorzugt ist auch eine Länge zwischen 2 cm und 12 cm, noch bevorzugter zwischen 3 cm und 10 cm möglich. Grundsätzlich bedarf es bei der Polsterträgerplatte längerer Funktionsarme, als dies im Stand der Technik notwendig war. Dies ergibt sich dadurch, dass die Eigenhöhe der Führung nun in die Polsterträgerplatte integriert ist und bei der Gesamtlänge der Führungsarme fehlt. Daher ist die Länge der Führungsarme auf die Einzelheiten der tatsächlichen Vorrichtung zur Sitztiefenverstellung anzupassen. Letztendlich ist wichtig, dass die Funktionsarme nach dem erfindungsgemäßen Ausführungsbeispiel zur gleichen Gesamthöhe der Polsterträgerplatte führen, wie dies im Stand der Technik bereits üblich war.

Ausserdem weist ein Ausführungsbeispiel einer Polsterträgerplatte des erfindungsgemäßen Sitztiefenverstellers verschiedene Funktionselemente auf. Diese Funktionselemente dienen dazu, mit anderen Funktionselementen des Sitztiefenverstellers im Allgemeinen zusammenzuwirken. Letztendlich ist dies vom Einzelfall abhängig und sollte an die Gegebenheiten und die Ausführung der Polsterträgerplatte angepasst werden. Vorteilhaft an der Polsterträgerplatte ist allerdings, dass die Funktionselemente durch die Integration in die Polsterträgerplatte eine höhere Steifigkeit und Haltbarkeit aufweisen. Ausserdem wird zusätzlicher Platz geschaffen, da bspw. Nietenaufnahmen und Löcher für die Verbindung der Führung mit der Polsterträgerplatte entfallen.

Eines der schwersten Elemente des Fahrzeugsitzes mit Sitztiefenversteller ist das Verbindungsteil zum Sitz hin. Dadurch, dass dieses nunmehr aus Kunststoff besteht, erfolgt eine erhebliche Gewichtsreduktion. Ausserdem können derartige Kunststoffteile wesentlich schneller im Spritzgiessverfahren hergestellt werden, als die herkömmlichen Blechteile. Zudem können dem erfindungsgemässen Tragteil auch alle möglichen Ein- und Anformungen zur Erhöhung seiner Funktionalität mit gegeben werden.

In einem bevorzugten Ausführungsbeispiel erfolgt die Herstellung des Tragteils aus Kohlenstofffaser verstärktem Kunststoff. Die Kohlenstofffasern sind dabei in mehreren Lagen in eine Kunststoffmatrix eingebettet. Dabei kann durch die Faserrichtung der erforderlichen Steifigkeit und Festigkeit des Tragteils Rechnung getragen werden.

Im Einzelnen handelt es sich bei dem kohlenstofffaserverstärkten Kunststoff, auch CFK oder umgangssprachlich nur Carbon genannt, um einen Faser-Kunststoff-Verbundwerkstoff, welcher meist in mehreren Lagen, als Verstärkung in eine Kunststoff-Matrix eingebettet ist.

Die Matrix besteht meist aus Duromeren, zum Beispiel Epoxidharz, oder aus Thermoplasten.

Ein erfindungsgemäßer Sitztiefenversteller für einen Fahrzeugsitz weist eine Basisplatte und eine Polsterträgerplatte auf. Die Basisplatte ist hierbei mit dem restlichen Fahrzeugsitz verbunden. Die Polsterträgerplatte dient neben der Verbindung mit der Basisplatte auf der einen Seite auch der Aufnahme des Sitzpolster als auf der anderen Seite. Hierbei wird bei Betätigen des Sitztiefenverstellers die Polsterträgerplatte samt des darauf befindlichen Polster des in die Kniekehle der sitzenden Person geschoben, bis eine komfortable Sitzposition erreicht ist. Vorteilhaft hierbei ist ein einfacher Aufbau, welcher grundsätzlich eine langlebige Konstruktion sichert.

Eine Polsterträgerplatte für einen erfindungsgemäßen Sitztiefenversteller weist eine Führung auf. Diese Führung wurde im Stand der Technik als gesondertes Teil mit der Polsterträgerplatte durch Vernieten oder auf eine andere Art und Weise ausgebildet. Es ist auch denkbar, dass die Führung einstückig der Polsterträgerplatte hergestellt wird. Die Führung dient der gezielten Verschiebbarkeit von der Polsterträgerplatte zu der Basisplatte.

Ein erfindungsgemässer Sitztiefenversteller weist eine Basisplatte und ein aus der Basisplatte herausfahrbares Schubelement zur Veränderung der Sitztiefe auf. Dies Besonderheit liegt darin, dass die Polsterträgerplatte ein Abstandselement umfasst. Dadurch wird vorteilhaft ein angenehmeres Sitzen und eine Stütze des Kniekehlenbereichs oder Oberschenkels des Nutzers erreicht. Durch diese Massnahme wird ein heute häufig auftauchendes Problem beseitig, dass nämlich Schubteil und Führungsteil zu viel Spiel haben, insbesondere, wenn die Einrichtung zur Sitztiefenverstellung gänzlich ausgezogen ist. In diesem Fall kann der Fahrer oder Beifahrer mit seinem Oberschenkel unter das ausgefahrene Teil haken und dieses anheben. Aus diesem Grunde darf das ausgefahrene Teil nicht mehr als 4 mm Spiel haben. Gemäss der vorliegenden Erfindung wird dies dadurch vermieden, dass das Spiel zur Schiene und Nut verringert wird. Auf diese Weise kann das vorgeschriebene Spiel eingehalten werden. Im ausgefahrenen Zustand kann der Sitztiefenversteller beim Fahren durch das Spiel Klappergeräusche verursachen. Diese Klappergeräusche werden durch den erfindungsgemässen Sitztiefenversteller verhindert werden.

Das Herausfahren der Polsterträgerplatte ist derart gestaltet, dass es entweder motorisch über einen Antrieb, bevorzugt Elektro-.Antrieb oder manuell von Statten gehen kann. Insgesamt wird dadurch die Sitztiefe des Fahrzeugsitzes verändert. Als Fahrzeug kommen hierbei Personenkraftfahrzeuge, Lastkraftfahrzeuge, Schifffahrzeuge oder Luftfahrzeuge in Betracht.

Der erfindungsgemässe Sitztiefenversteller ist derart gestaltet, dass das die herausfahrbare Polsterträgerplatte über ein Schienensystem aus der Basisplatte ausfahrbar ist. In einem bevorzugten Ausführungsbeispiel ist die Schiene als liegendes L ausgebildet und greift mit einem Fussstreifen in die hinterschnittene Nut ein. Dabei wirkt vor allem der Rest des Fussstreifens mit der Nutdecke zusammen. Deren Abstand zueinander wird verringert. Der Einfachheit halber geschieht dies dadurch, dass beide eine Schrägfläche aufweisen, die schräg zur Schubrichtung verläuft. Beim Ausfahren des Sitztiefenverstellers wird so der Abstand zwischen den beiden Schrägflächen vermindert und so das Spiel ausgeglichen. Von der Erfindung werden auch sämtliche andere möglichen Linearführungen umfasst.

Ein Abstandselement des erfindungsgemäßen Sitztiefenverstellers ist auf der der Basisplatte zugewandten Seite der Polsterträgerplatte angeordnet, um ein Abstützen des Sitzschalenbereichs gegenüber dem restlichen Bereich des Fahrzeugsitzes zu erreichen. Dadurch wird vorteilhaft ein Spiel zwischen der Polsterträgerplatte und dem restlichen Bereich des Fahrzeugsitzes erreicht.

In einem bevorzugten Ausführungsbeispiel ist das Abstandselement aus Kunststoff oder Metall hergestellt. Das Abstandselement wird ausserdem mit der Polsterträgerplatte verbunden, sodass ein Teil des Abstandselements aus der Polsterträgerplatte hervorsteht. Hierdurch wird die Polsterträgerplatte zusätzlich klemmend gegenüber dem restlichen Fahrzeugsitz, insbesondere der Sitzfläche des Fahrzeugsitzes gelagert. Hierdurch wiederum wird ein spielfreies Halten der Polsterträgerplatte erreicht.

Die Verbindung der Polsterträgerplatte mit dem Abstandselement ist derart gestaltet, dass das Abstandselement beispielsweise über eine Gewindeverbindung in die Polsterträgerplatte eingeschraubt werden kann. Es ist aber auch denkbar, dass das Abstandselement mit der Polsterträgerplatte verschweisst oder auf eine andere Weise gefügt wird, solange eine feste Verbindung zwischen dem Abstandselement und der Polsterträgerplatte entsteht.

Eine Vorrichtung dient zur Einbringung in eine Führung des erfindungsgemäßen Sitztiefenverstellers. Der Sitztiefenversteller besteht hierbei aus einer Polsterträgerplatte und einer Basisplatte. Die Polsterträgerplatte dient dazu, einen Teil der Sitzfläche von dem restlichen Teil der Sitzfläche abzukoppeln und zu verschieben. Die Polsterträgerplatte weist hierbei das abzukoppelnde Stück der Sitzfläche auf, welche beispielsweise bei Bedarf in die Kniekehle des Insassen geschoben werden kann, um eine bequemere Sitzposition zu erreichen und ein entspannteres Reisen zu ermöglichen. Die Basisplatte stellt die Verbindung zwischen der Polsterträgerplatte und dem restlichen Sitzbereich dar. In einer erfindungsgemässen Vorrichtung ist die Polsterträgerplatte gegenüber der Basisplatte verschiebbar angeordnet. Die Verschiebbarkeit wird durch zumindest eine, bevorzug zwei Führungen erreicht. Die Form und Gestaltung der Führung ist insoweit unbeachtlich. Regelmässig sind hier beispielsweise T-Führungen anzutreffen, die beispielsweise ineinander greifen und es ermöglichen, dass die Polsterträgerplatte zur Basisplatte linear verschoben werden kann.

Die o.g. Vorrichtung wird dabei in die Führung des erfindungsgemäßen Sitztiefenverstellers eingeclipst. Die Vorrichtung weist einen ersten Federbogen auf, welcher als Teil eines umlaufenden Grundelements ausgebildet ist. Die Form und Gestaltung des Grundelements ist an die vom Nutzer in der Polsterträgerplatte vorgesehenen Ausnehmung ausgerichtet. In einem bevorzugten Ausführungsbeispiel handelt es sich um eine runde Ausgestaltung des Grundelements. Es ist aber auch denkbar, dass das Grundelement eine andere Form aufweist.

Weiterhin ist an der Vorrichtung neben dem ersten Federbogen ein zweiter Federbogen angeordnet, welcher im Wesentlichen rechtwinklig zum ersten Federbogen verläuft. Durch die im Wesentlichen rechtwinklige Anordnung des zweiten Federbogens zum ersten Federbogen ist es vorteilhaft möglich, dass die Polsterträgerplatte spielfrei gefedert zu der Basisplatte angeordnet werden kann. Zwei rechtwinklig zu einander angeordnete Federbogen führen dazu, dass beispielsweise bei einem als Eckprofil ausgeführte Basiselement eine sichere spielfreie Lagerung gewährleistet ist. In jeder Position der Baueinheit, unabhängig, ob es eingefahren oder ausgefahren ist, gewährleisten der erste Federbogen und der zweite Federbogen ein Herausdrücken, womit letztendlich die Geräuschentwicklung bei der Relativbewegung der Polsterträgerplatte zur Basisplatte verhindert wird.

In einem bevorzugten Ausführungsbeispiel ist das Grundelement derart ausgeführt, dass ein bestimmter Bereich des Grundelements als Federbogen wirkt. Das Grundelement wird in die Führung des Sitztiefenverstellers eingebracht. Dazu ist beispielsweise in der Polsterträgerplatte eine Ausnehmung vorgesehen, in welcher das Grundelement samt dem ersten Federbogen eingeclipst werden kann. Die Form der Ausnehmung in der Polsterträgerplatte ist insoweit weniger wichtig. Der Umstand, dass das Grundelement samt erstem Federbogen in den Sitztiefenversteller, insbesondere in die Polsterträgerplatte einbringbar ist, hat den Vorteil, dass beispielsweise bei der Herstellung eines Sitztiefenverstellers das Einbringen der erfindungsgemässen Vorrichtung in die schon vorgesehenen Führungen vereinfacht ist.

Ein anderes Ausführungsbeispiel der Vorrichtung ist derart gestaltet, dass an jedem Übergang des ersten Federbogens zu dem restlichen Grundelement je eine Verlustsicherung vorhanden ist. Als Verlustsicherung kommen alle Ausführungen in Betracht, die gewährleisten, dass das in die Ausnehmung eingebrachte Grundelement nicht mehr aus der Polsterträgerplatte herausfallen kann. Denkbar könnte hier beispielsweise eine doppelseitige Klebebandkonstruktion oder ein Kleber sein, die gewährleisten würden, dass das Grundelement nicht aus der Polsterträgerplatte fallen kann, bis eine Verbindung der Polsterträgerplatte mit der Basisplatte vorgenommen wurde. Anschliessend würde dann das Zusammenspiel aus Polsterträgerplatte und Basisplatte dafür sorgen, dass das Grundelement nicht herausfallen kann.
In einem besonders bevorzugten Ausführungsbeispiel der Verlustsicherung ist an jedem Übergang des ersten Federbogens zum restlichen Grundelement je eine Verlustsicherung vorhanden. Die Verlustsicherung ist als eine nachgiebige Rampe ausgebildet, welche sich zu dem zweiten Federbogen hin von dem Grundelement abspreizt. Es ist aus einem nachgiebigen Material, wie Kunststoff hergestellt, sodass beispielsweise ein Zusammenspiel mit einer entsprechenden Ausnehmung der Polsterträgerplatte möglich ist. So kann beispielsweise das Grundelement mit der nachgiebigen Rampe in die Ausnehmung der Polsterträgerplatte derart eingeclipst werden, dass die Rampe mit dem ansteigenden Ende voraus in die Ausnehmung eingebracht wird und dann an einer definierten Position, dass als abgespreizte Kante ausgebildete Ende der Rampe in die vorgesehene Ausnehmung der Polsterträgerplatte hineinschnappt und des als Ecke ausgebildeten Endes nicht mehr aus der Polsterträgerplatte entnommen werden kann. Das als Ecke ausgebildete Ende der Rampe wirkt wie ein Sperrmechanismus.

### FIGURENBESCHREIBUNG

Weitere Vorteile, Einzelheiten und Merkmale ergeben sich aus der nachfolgenden Beschreibung der Figuren. Diese zeigen in
Figur 1 eine Draufsicht auf einen erfindungsgemässen Sitztiefenversteller;
Figur 2 eine Unteransicht des Sitztiefenverstellers nach Figur 1;
Figur 3 eine Explosionsdarstellung des Sitztiefenverstellers nach den Figuren 1 und 2;
Figur 4 eine teilweise geschnittene Seitenansicht eines Eckbereiches des Sitztiefenverstellers;
Figur 5 eine teilweise transparente Ansicht der Figur 1;
Figuren 6 und 7 eine teilweise vergrösserte Ansicht verschiedener Teilbereiche des Sitztiefenverstellers.

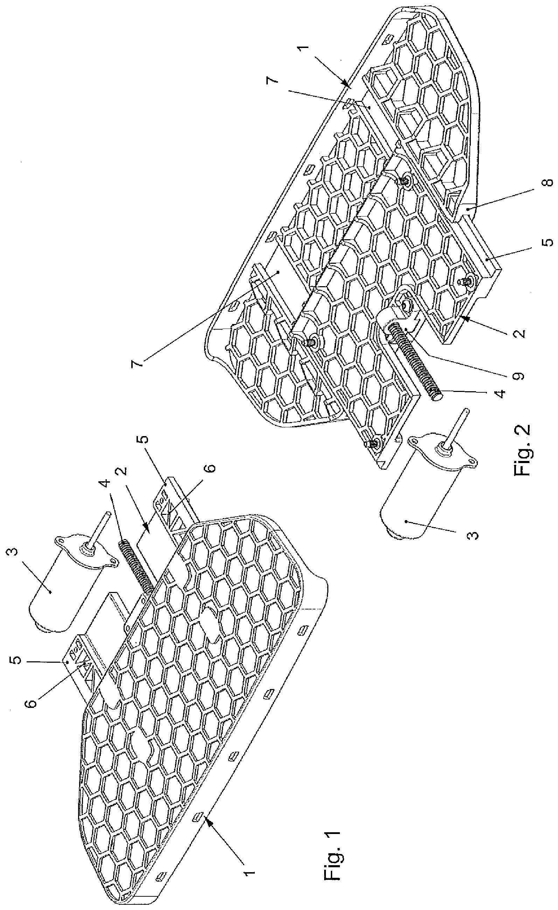

In Figur 1 ist eine Polsterträgerplatte 1 und eine Basisplatte 2 gezeigt. Daneben ist ein Elektroantrieb 3 zu erkennen, welcher über eine Spindel 4 mit der Polsterträgerplatte 1 in Wirkverbindung steht. Dies bedeutet im Einzelnen, dass der Elektroantrieb 3 für das Aus- und Einfahren der Polsterträgerplatte 1 in einen Kniekehlenbereich eines Nutzers zuständig ist. Dazu weist die Basisplatte 2 eine Führung 5 auf, welche wiederum Verstärkungsrippen 6 umfasst. Diese Führung 5 ist mit einer Schiene 7 der Polsterträgerplatte 1 in Wirkverbindung. Die Schiene 7 ist besonders gut in Figur 2 zu erkennen. Dabei weist die Führung 5 eine L-Form auf, wobei der kurze Bereich der L-Form durch einen Maulbereich 8 der Schiene 7 umschlossen ist.

Die Polsterträgerplatte 1 und die Basisplatte 2 sind aus Kunststoff hergestellt. Daher benötigen sie sogenannte Verstärkungsrippen, um eine ausreichende Steifigkeit aufzuweisen.

Weiter ist in Figur 2 ein Spindelanker 9 zu sehen, welcher die Drehbewegung der Spindel 4 des Elektroantriebs 3 auf die Polsterträgerplatte 1 überträgt.

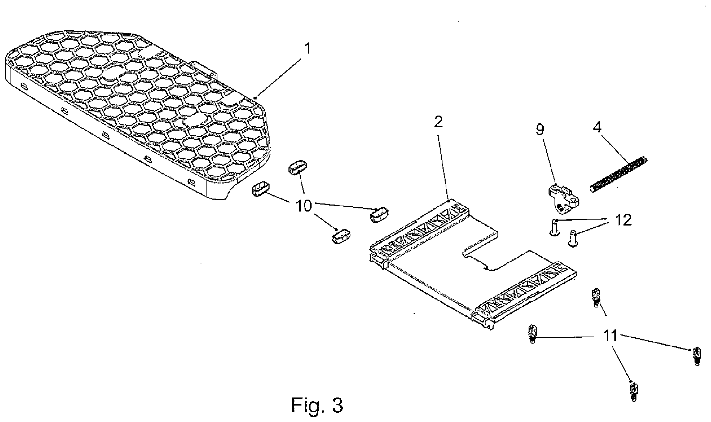

In Figur 3 ist weiter ein Federbogenelement 10 gezeigt. Das Federbogenelement 10 ist zwischen der Polsterträgerplatte 1 und der Basisplatte 2 angeordnet. Ausserdem sind Befestigungselemente 11 gezeigt, welche zur Verbindung der Basisplatte 2 mit dem restlichen Fahrzeugsitz dienen. Die Befestigungselemente 11 werden nach Einbringen in die Basisplatte 2 umgossen. Daneben sind andere Befestigungselemente 12 gezeigt, welche zur Befestigung des Spindelankers 9 an der Basisplatte 2 dienen. Diese anderen Befestigungselemente 12 werden ebenfalls nach dem Einbringen in den Spindelanker 9 zur Befestigung mit der Basisplatte 2 umgossen.

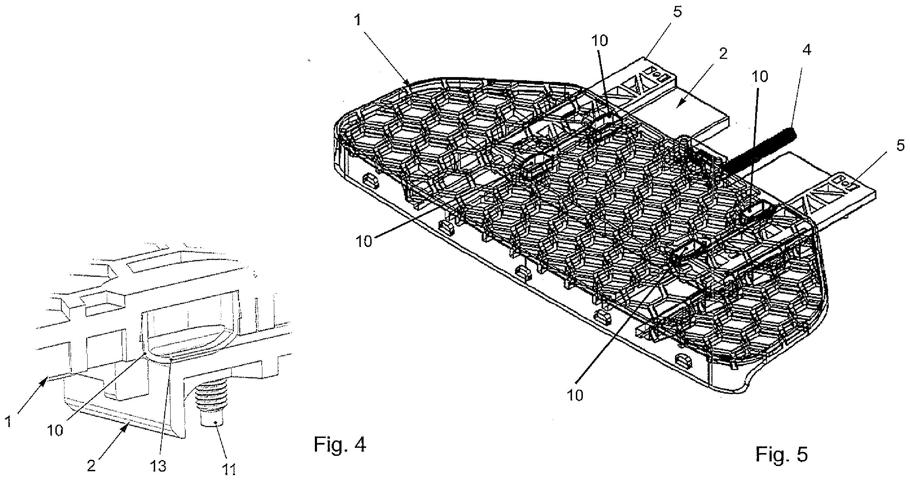

In Figur 4 ist zu erkennen, wie das Federbogenelement 10 innerhalb der Polsterträgerplatte 1 angeordnet ist, um sich über einen Federbogen 13 von der Basisplatte 2 abzustützen. Dadurch werden die Gleiteigenschaften verbessert. Dies wirkt ausserdem dem Stick-Slip-Effekt entgegen. Daneben wird auch das Spiel insgesamt reduziert, da das Federbogenelement 10 aufgrund seiner Form mit Überdeckung eingebaut werden kann.

Weitere Optimierungsmöglichkeiten ergeben sich dadurch, dass das Konglomerat aus dem Spindelanker 9 und der Spindel 4 als Trapezgewindetrieb ausgeformt ist. Durch die somit erreichte Selbsthemmung in Abhängikeit der Materialpaarung wird das Spiel weiter reduziert.

In Figur 5 ist die Polsterträgerplatte 1 transparent dargestellt, um zu zeigen, dass die Federbogenelemente 10 zwischen den beiden Führungen 5 der Basisplatte 2 anliegen. Die Führungen 5 sind jeweils endseitig auf den kürzeren Stirnflächen der Basisplatte 2 ausgeformt und nehmen jeweils ca. 1/6 der Gesamtfläche der Basisplatte 2 ein.

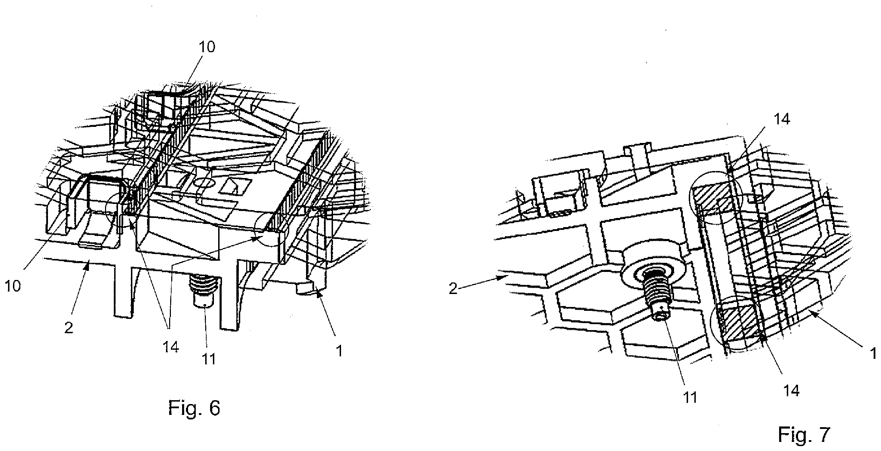

Die Figuren 6 und 7 zeigen sogenannte Abstimmflächen 14, welche gezielt integriert werden. Die Abstimmflächen 14 dienen zur weiteren Spielreduzierung der Gesamtkonstruktion. Ausserdem ist in den Figuren 6 und 7 die Polsterträgerplatte 1 wieder transparent dargestellt. Auf diese Weise ist gut zu erkennen, wie innerhalb des Maulbereiches 8 die L-förmige Führung 5 die angesprochenen Abstimmflächen 14 aufweist. Es handelt sich hierbei um Flächen der Führung 5, welche Materialanhäufungen darstellen.

Das Abstandselement ist auf der der Basisplatte 2 zugewandten Seite der Polsterträgerplatte 1 angeordnet. Das Abstandselement kann dabei aus Kunststoff oder Metall bestehen. Ein Federbogenelement 10 weist einen ersten Federbogen auf, wobei das Federbogenelement 10 als Teil eines umlaufenden Grundelements ausgebildet ist. Weiter ist ein zweiter Federbogen derart angeordnet, dass er im Wesentlichen rechtwinklig zu dem ersten Federbogen angeordnet ist. Das Grundelement ist in die Seite der Polsterträgerplatte 1 einbringbar, welche der Basisplatte 2 im eingebauten Zustand zugewandt ist. Das Grundelement weist eine Verlustsicherung auf, wobei die Verlustsicherung eine nachgiebige Rampe ist und die Rampe an einem jeden Übergang des ersten Federbogens zu dem restlichen Grundelement vorhanden ist, wobei die Rampe sich zu dem zweiten Federbogen hin von dem Grundelement abspreizt.

Ein erfindungsgemässer Sitztiefenversteller ist derart gestaltet, dass der erste Federbogen und der zweite Federbogen von dem Grundelement eine wegfedernde Eigenschaft aufweisen, geeignet die Geräuschentwicklung bei der Relativbewegung der Trägerplatte zur Basisplatte zu verhindern.

## Patentansprüche

1. Sitztiefenversteller mit einer Polsterträgerplatte (1), einer Basisplatte (2) und einem elektrischen Antrieb (3), wobei die Polsterträgerplatte (1) aus glasfasverstärktem Kunststoff besteht, wobei die Verbindung von Bauteilen untereinander und/oder von Bauteilen mit der Polsterträgerplatte (1) und/oder der Polsterträgerplatte (1) mit einem Sitzteil durch eingespritzte oder eingegossene Befestigungselemente (11) erfolgt, **dadurch gekennzeichnet, dass** der elektrische Antrieb (3) über eine Spindel (4) mit der Polsterträgerplatte zusammenwirkt und dass ein Befestigungselement einen Gewindeabschnitt zum Aufsetzen einer Mutter aufweist und ein Befestigungselement einen umspritz- oder umgiessbaren weiteren Gewindeabschnitt aufweist, wobei zwischen beiden Gewindeabschnitten ein scheibenförmiger Abschnitt vorgesehen ist und der Durchmesser des umspritz- bzw. umgiessbaren weiteren Gewindeabschnitts grösser ist als der Durchmesser des Gewindeabschnitts, wobei eine Gewindetiefe des umspritz- bzw. umgiessbaren weiteren Gewindeabschnitts wesentlich tiefer und/oder eine Steigung wesentlich höher ist, als diejenige des Gewindeabschnitts.

2. Sitztiefenversteller nach Anspruch 1, **dadurch gekennzeichnet, dass** die Basisplatte (2) eine Führung (5) aufweist, die in eine hinterschnittene Schiene (7) der Polsterträgerplatte (1) eingreift oder die Polsterträgerplatte (1) eine Führung (5) aufweist, die in eine hinterschnittene Schiene (7) der Basisplatte (2) eingreift, wobei die Schiene (7) und die Führung (5) bei einer relativen Schubbewegung des Einen zu dem Anderen einen sich verändernden Abstand einhalten.

3. Sitztiefenversteller nach Anspruch 2, **dadurch gekennzeichnet, dass** die Führung (5) als liegendes L ausgebildet ist und mit einem Fussstreifen in einen Maulbereich (8) oder Hinterschneidung der Schiene (7) eingreift.

4. Sitztiefenversteller nach Anspruch 3, **dadurch gekennzeichnet, dass** ein Rist des Fussstreifens den sich verändernden Abstand mit einer Nutdecke ausbildet.

5. Sitztiefenversteller nach wenigstens einem der Ansprüche 2 bis 4, **dadurch gekennzeichnet, dass** die Führung (5) und die Schiene (7) jeweils eine miteinander zusammenwirkende Schrägfläche aufweisen.

6. Sitztiefenversteller nach einem der vorigen Ansprüche, **dadurch gekennzeichnet, dass** die Polsterträgerplatte (1) die Führung (5) zur Bewegung der Polsterträgerplatte (1) relativ zu der Basisplatte (2) aufweist, wobei die Polsterträgerplatte (1) und die Führung (5) einstückig ausgebildet sind.

7. Sitztiefenversteller nach Anspruch 6, **dadurch gekennzeichnet, dass** die Führung (5) im wesentlichen den mittigen Teil der Polsterträgerplatte (1) ausmacht.

8. Sitztiefenversteller nach einem der vorigen Ansprüche, **dadurch gekennzeichnet, dass** die Basisplatte (2) und die aus der Basisplatte (2) herausfahrbare Polsterträgerplatte (1) ein Abstandselement umfasst.

9. Sitztiefenversteller nach einem der vorigen Ansprüche 2 bis 8, **dadurch gekennzeichnet, dass** die herausfahrbare Polsterträgerplatte (1) über die Schiene (7) aus der Basisplatte (2) ausfahrbar ist.

## Claims

1. Seat depth adjuster comprising an upholstery support plate (1), a base plate (2) and an electric drive (3), wherein the upholstery support plate (1) is made of glass-fiber-reinforced plastic, wherein the connection of components to one another and/or of components to the upholstery support plate (1) and/or of the upholstery support plate (1) to a seat part takes place by way of molded-in or cast-in fastening elements (11), **characterized in that** the electric drive (3) cooperates with the upholstery support plate via a spindle (4), and **in that** one fastening element has a threaded section for the placement of a nut and one fastening element has an overmoldable or encapsulable further threaded section, wherein a disc-shaped section is provided between the two threaded sections and the diameter of the overmoldable or encapsulable further threaded section is larger than the diameter of the threaded section, wherein a thread depth of the overmoldable or encapsulable further threaded section is significantly deeper and/or a pitch is significantly greater than that of the threaded section.

2. Seat depth adjuster according to claim 1, **characterized in that** the base plate (2) has a guide (5) which engages in an undercut rail (7) of the upholstery support plate (1), or the upholstery support plate (1) has a guide (5) which engages in an undercut rail (7) of the base plate (2), wherein the rail (7) and the guide (5) maintain a varying distance during a relative thrust movement of one with respect to the other.

3. Seat depth adjuster according to claim 2, **characterized in that** the guide (5) is configured as a horizontal L and engages with a foot strip in a mouth region (8) or undercut of the rail (7).

4. Seat depth adjuster according to claim 3, **characterized in that** an instep of the foot strip forms the varying distance with a groove ceiling.

5. Seat depth adjuster according to at least one of claims 2 to 4, **characterized in that** the guide (5) and the rail (7) each have an inclined surface, and said inclined surfaces cooperate with one another.

6. Seat depth adjuster according to one of the preceding claims, **characterized in that** the upholstery support plate (1) has the guide (5) for the movement of the upholstery support plate (1) relative to the base plate (2), wherein the upholstery support plate (1) and the guide (5) are formed in one piece.

7. Seat depth adjuster according to claim 6, **characterized in that** the guide (5) substantially constitutes the middle part of the upholstery support plate (1).

8. Seat depth adjuster according to one of the preceding claims, **characterized in that** the base plate (2) and the upholstery support plate (1), which can be extended out of the base plate (2), comprises a spacer element.

9. Seat depth adjuster according to one of the preceding claims 2 to 8, **characterized in that** the extendable upholstery support plate (1) can be extended out of the base plate (2) via the rail (7) .

## Revendications

1. Dispositif de réglage de profondeur d'assise avec une plaque de support de rembourrage (1), une plaque de base (2) et un dispositif d'entraînement électrique (3), la plaque de support de rembourrage (1) étant constituée d'une matière plastique renforcée par des fibres de verre, la liaison de composants entre eux et/ou de composants avec la plaque de support de rembourrage (1) et/ou de la plaque de support de rembourrage (1) avec une partie d'assise ayant lieu par l'intermédiaire d'éléments de fixation (11) injectés ou moulés, **caractérisé en ce que** le dispositif d'entraînement électrique (3) interagit avec la plaque de support de rembourrage par l'intermédiaire d'une broche (4) et **en ce qu'**un élément de fixation comprend une portion filetée pour la mise en place d'un écrou et un élément de fixation comprend une autre portion filetée pouvant être sur-injectée ou surmoulée, une portion en forme de disque étant prévue entre les deux portions filetées et le diamètre de l'autre portion filetée pouvant être sur-injectée ou surmoulée étant supérieur au diamètre de la portion filetée, une profondeur de filetage de l'autre portion filetée pouvant être sur-injectée ou surmoulée étant nettement supérieure et/ou le pas étant nettement supérieur à celui de la portion filetée.

2. Dispositif de réglage de profondeur d'assise selon la revendication 1, **caractérisé en ce que** la plaque de base (2) comprend un guidage (5) qui s'emboîte dans un rail à contre-dépouille (7) de la plaque de support de rembourrage (1) ou la plaque de support de rembourrage (1) comprend un guidage (5) qui s'emboîte dans un rail à contre-dépouille (7) de la plaque de base (2), le rail (7) et le guidage (5) présentant une distance variable lors d'un mouvement de poussée relatif de l'un vers l'autre.

3. Dispositif de réglage de profondeur d'assise selon la revendication 2, **caractérisé en ce que** le guidage (5) présente la forme d'un L couché et s'emboîte avec une bande de pied dans une embouchure (8) ou une contre-dépouille du rail (7).

4. Dispositif de réglage de profondeur d'assise selon la revendication 3, **caractérisé en ce qu'**un cou-de-pied de la bande de pied forme la distance variable avec une partie supérieure de rainure.

5. Dispositif de réglage de profondeur d'assise selon l'une des revendications 2 à 4, **caractérisé en ce que** le guidage (5) et le rail (7) comprennent chacun une surface inclinée interagissant avec la surface inclinée de l'autre.

6. Dispositif de réglage de profondeur d'assise selon l'une des revendications précédentes, **caractérisé en ce que** la plaque de support de rembourrage (1) comprend le guidage (5) pour le mouvement de la plaque de support de rembourrage (1) par rapport à la plaque de base (2), la plaque de support de rembourrage (1) et le guidage (5) étant formés d'une seule pièce.

7. Dispositif de réglage de profondeur d'assise selon la revendication 6, **caractérisé en ce que** le guidage (5) forme globalement la partie centrale de la plaque de support de rembourrage (1).

8. Dispositif de réglage de profondeur d'assise selon l'une des revendications précédentes, **caractérisé en ce que** la plaque de base (2) et la plaque de support de rembourrage (1) déployable hors de la plaque de base (2) comprennent une entretoise.

9. Dispositif de réglage de profondeur d'assise selon l'une des revendications précédentes 2 à 8, **caractérisé en ce que** la plaque de support de rembourrage (1) déployable peut être déployée hors de la plaque de base (2) par l'intermédiaire du rail (7).
